# EUROPÄISCHE PATENTSCHRIFT

(11) **EP 4 462 088 B1**
(45) Veröffentlichungstag und Bekanntmachung des Hinweises auf die Patenterteilung: **02.09.2026**
(21) Anmeldenummer: 23173105.0
(22) Anmeldetag: 12.05.2023
(51) Int. Cl.: G01F 23/263

(54) **MESSVORRICHTUNG ZUR AUTONOMEN UND DRAHTLOSEN ERFASSUNG FLUIDER MEDIEN IN EINER UMGEBUNG**
MEASURING DEVICE FOR AUTONOMOUS AND WIRELESS DETECTION OF FLUID MEDIA IN AN ENVIRONMENT
DISPOSITIF DE MESURE POUR LA DÉTECTION AUTONOME ET SANS FIL DE FLUIDES DANS UN ENVIRONNEMENT

(43) Veröffentlichungstag der Anmeldung: 13.11.2024
(73) Patentinhaber: ArianeGroup GmbH, 82024 Taufkirchen (DE)
(72) Erfinder: Hessel, Christian, 28199 Bremen (DE); Sebald, Johannes, 28199 Bremen (DE); Jurczyk, Christoph, 28199 Bremen (DE)
(74) Vertreter: Marschall, Stefan

(56) Entgegenhaltungen:
- CN-A- 115 183 841
- DE-A1- 3 044 353
- US-A1- 2004 079 150
- US-A1- 2005 192 727

## Beschreibung

Die vorliegende Erfindung betrifft eine Messvorrichtung zur Erfassung von zumindest einer Eigenschaften eines fluiden Mediums in einer Umgebung nach dem Oberbegriff des Patentanspruchs 1, umfassend mindestens zwei in der Umgebung angeordnete und voneinander beabstandete Elektroden, die dazu eingerichtet sind, eine elektrische Kapazität im Zwischenraum zwischen ihnen zu messen.

Bei einer bekannten Messvorrichtung werden zur Messung einer Eigenschaft eines fluiden Mediums, beispielsweise der Füllstand in einem Tank, Füllstand-Sensoren zur Messung der Kapazität an der Innenseite des Tanks mit den Elektroden elektrisch verbunden und durch mindestens zwei koaxiale Verbindungen durch Öffnungen in der Wand des Tanks mit einem externen Messverstärker außerhalb des Tanks verbunden. Dadurch werden beispielsweise für fünf Sensoren mit jeweils zwei Elektroden zehn koaxiale Verbindungen und damit zehn bzw. eine entsprechend große Öffnungen in der Wand des Tanks benötigt. Diese koaxialen Verbindungen werden meistens durch gasdichte Durchführungen durch die Tankhülle unter Verwendung spezieller Stecker realisiert. Diese Stecker müssen zum einen die geringen elektrischen Signale zur Messung der Kapazität geeignet sein und zum anderen in einem anspruchsvollen Temperaturumfeld mit hohen mechanischen Lasten, wie Vibration und mechanische Schocks, verwendet werden können. Ein weiterer wichtiger Aspekt ist die Dichtigkeit an den Durchführungsöffnungen für die koaxiale Verbindungen. Eine wesentliche Grundvoraussetzung für den sicheren Betrieb eines Tanks für ein fluides Mittel, beispielsweise ein Tank mit flüssigem kryogenen Treibstoff für eine Trägerrakete, ist die Dichtigkeit dieser Durchführungsöffnungen. Durch die Durchführung der elektrischen Signale wird die strukturelle Hülle des Tanks durchbrochen, wodurch eine zuverlässige Abdichtung der elektrischen Durchführungsöffnungen notwendig ist. Mit der Verwendung von flüssigem Wasserstoff als Treibstoff für Trägerraketen stellt die Ausführung einer solchen Abdichtung wegen der geringen Molekülgröße von Wasserstoff eine Herausforderung dar.

Des Weiteren sind Messvorrichtungen bekannt, bei denen Füllstand-Sensoren zur Messung der Kapazität an der Außenseite des Tanks angeordnet sind, wie zum Beispiel in der CN 115 183 841 A offenbart.

Aufgabe der vorliegenden Erfindung ist daher, eine Messvorrichtung bereitzustellen, die eine zuverlässige Messung einer Eigenschaft bzw. eines Zustandes eines Mediums in einer Umgebung und eine ausreichende Abdichtung einer die Umgebung begrenzenden Umgebungshülle ermöglicht.

Diese Aufgabe wird gelöst durch eine Messvorrichtung mit den Merkmalen des Patentanspruchs 1.

Die Erfindung betrifft eine Messvorrichtung für ein fluides Medium in einer Umgebung umfassend mindestens zwei in der Umgebung angeordnete und voneinander beabstandete Elektroden, die dazu eingerichtet sind, eine elektrische Kapazität im Zwischenraum zwischen ihnen zu messen. Die Messvorrichtung umfasst dabei zusätzlich mindestens einen Oberflächenwellen-Sensor (engl. Surface Acoustic Wave - SAW), eine nicht elektrisch leitende Trägerschicht, mindestens eine Antenne und mindestens einen Interrogator, wobei die Elektroden auf der nichtleitenden Trägerschicht angebracht sind. Die beiden Elektroden sind mit dem Oberflächenwellen-Sensor elektrisch verbunden, wobei die Antenne innerhalb der Umgebung angeordnet ist und mittels einer elektrischen Verbindung durch eine Durchgangsöffnung durch eine Umgebungshülle elektrisch mit dem Interrogator außerhalb der Umgebung verbunden ist. Ein drahtloses Abfragesignal vom Interrogator ist mittels der Antenne an den Oberflächenwellen-Sensor übermittelbar. Der Oberflächenwellen-Sensor ist durch das Abfragesignal anregbar und ein drahtloses Antwortsignal ist mittels der Antenne empfangbar und an den Interrogator übermittelbar. Das Antwortsignal ist mittels des Interrogators auswertbar, um die elektrische Kapazität zwischen den Elektroden zu messen und daraus zumindest eine Eigenschaft des fluiden Mediums innerhalb der Umgebung zu ermitteln.

Eine Umgebung kann beispielsweise ein Tank wie ein Treibstofftank oder ein Rohrsegment beispielsweise eine Fluidverteilungssystems sein. Ein anderer Begriff für Umgebung ist Bilanzraum. Zu erfassende Eigenschaften können beispielsweise ein Füllstand, eine Verteilung des fluiden Mediums in der Umgebung, ein Anteil des fluiden Mediums in der Umgebung, die Art des fluiden Mediums, eine Temperatur des fluiden Mediums, eine Strömungsrichtung, eine Strömungsgeschwindigkeit und dergleichen sein. Die Erfassung erfolgt direkt, sprich drahtlos und bevorzugterweise auch autonom.

Die vorliegende Messvorrichtung verwendet mindestens einen Oberflächenwellen-Sensor (engl. Surface Acoustic Wave - SAW). Oberflächenwellen-Sensoren (SAW) Sensoren sind passive drahtlose Sensoren, die elektromagnetische Wellen eines Abfragesignals durch ein Interdigital Transducer (IDT) = Antenne unter Verwendung piezoelektrischer Substrate in akustische Oberflächenwellen wandeln, welche darauf durch die zu messende physikalische Größe manipuliert werden. Die manipulierten Oberflächenwellen werden durch den IDT wieder in ein elektromagnetisches Antwortsignal umgewandelt und abgestrahlt. Dieses Antwortsignal kann empfangen und gemessen werden, und aus dem geänderten Antwortsignal der Wert der elektrischen Kapazität des fluiden Mediums bestimmt werden.

Zur Manipulation der akustischen Oberflächenwelle durch die Messgröße werden grundsätzlich zwei Prinzipen verwendet:
Der Oberflächenwellen-Sensor kann beispielsweise ein Resonator-Type Oberflächenwellen (SAW)-Sensor sein, der die Anregung einer auf dem Sensor durch das Abfragesignal erzeugten Resonanz mit entsprechender Resonanzfrequenz nutzt. Sobald man das Abfragesignal abschaltet, sendet der Oberflächenwellen-Sensor ein abklingendes Antwortsignal mit einer bestimmten Resonanzfrequenz. Diese Resonanzfrequenz ist unter anderem von der Messgröße, im vorliegenden Fall elektrische Kapazität, abhängig.

Der Oberflächen-Sensor kann beispielsweise ein Delay-Line-Type Oberflächenwellen (SAW)-Sensor sein, der die Änderung der Geschwindigkeit der Oberflächenwelle bzw. des von der Oberflächenwelle zurückgelegten Weges nutzt. Dazu werden Reflektoren im SAW-Sensoren genutzt, welche die akustische Oberfläche nach dem Empfangen des Anregungssignals reflektieren und zurück zum IDT schicken. Der Zeitpunkt der Reflektion ist abhängig von der physikalischen Position des Reflektors, welche unter anderem bei diesem Typ durch die Messgröße, im vorliegenden Fall elektrische Kapazität des fluiden Mediums, verändert wird.

Durch die Bestimmung der zeitlichen Differenz des Anregungssignals und Antwortsignals (durch die Reflektion), kann die Messgröße bestimmt werden.

Die Anregung durch das Abfragesignal und Interpretation des Antwortsignals wird durch einen sogenannten Interrogator durchgeführt. Dieser sendet ein elektromagnetisches Abfragesignal mit einem bestimmen Frequenzspektrum und Leistungsspektrum aus und empfängt durch eine Antenne die leistungsschwachen Antwortsignale vom mindestens einen Oberflächenwellen-Sensor.

Messgrößen können so typischerweise bis zu einer Entfernung beispielsweise von etwa 10 m zwischen Sensor und Interrogator ohne jegliche Kabelverbindungen gemessen werden.

Der mindestens eine Oberflächenwellen-Sensor arbeitet dabei komplett passiv (rein mechanischer Aufbau ohne elektronische Bauteile) und ohne eine lokale Energieversorgung, wie beispielsweise eine Batterie, zu benötigen. Dies ermöglicht eine Verwendung des mindestens einen Oberflächenwellen-Sensors in anspruchsvollen Umgebungen, wie bei tiefen Temperaturen, hohen Beschleunigungen, Umgebungen mit ionisierender Strahlung. Daher ist die vorliegende Messvorrichtung insbesondere zur Messung eines fluiden Mediums, wie beispielsweise eines flüssigen Treibstoffes, in einem Tank einer Trägerrakete geeignet.

Das fluide Medium kann ein kryogener, flüssiger Treibstoff für eine Trägerrakete, wie LOX oder LH2, sein, wobei dieses fluide Mittel die elektrische Kapazität innerhalb des Tanks beim Befüllen beeinflusst durch die Änderung der Dielektrizitätskonstante des fluiden Mediums, sodass beispielsweise der Füllstand des Tanks über die Messung der elektrischen Kapazität des mindestens einen Oberflächenwellen-Sensors bestimmt werden kann.

Der externe Interrogator kann einen Messverstärker und/oder Messwandler umfassen, der die geringen Antwortsignale aufgrund der elektrischen Kapazitätswerte in ein ausreichend großes Spannungssignal umwandelt, welches dann von der Steuerung der Trägerrakete akquiriert und genutzt werden kann, um beispielsweise den Füllstand der Trägerrakete zu ermitteln.

Die nichtleitende Trägerschicht kann aus einem beliebigen elektrisch isolierenden Material, wie beispielsweise aus Kapton oder einer Glasfaserschicht, hergestellt sein.

Die elektrische Verbindung durch die Durchgangsöffnung in der Umgebungshülle kann mit einer Dichtung versehen sein, die geeignet ist das fluide Medium innerhalb der Umgebung, wie einen kryogenen, fluiden Treibstoff für einen Trägerrakete, bei tiefen Temperaturen und hohem Druck abzudichten.

Das drahtlose Abfragesignal wird folglich vom Interrogator mittels der Antenne an den Oberflächen-Sensor übermittelt der dadurch angeregt wird und ein drahtloses Antwortsignal mittels der Antenne an den Interrogator zurücksendet, wobei das Antwortsignal mittels des Interrogators ausgewertet wird, um die Kapazität zwischen den Elektroden zu messen und daraus beispielsweise den Füllstand innerhalb der Umgebung abzuleiten.

Das Ermitteln der zumindest einen Eigenschaft des fluiden Mediums in seiner Umgebung wie des Füllstandes innerhalb eines Tanks auf der Grundlage der gemessenen elektrischen Kapazität zwischen jeweiligen Elektroden kann mittels des Interrogator oder auch mittels eines separaten Auswerteeinheit erfolgen.

Die Auswerteeinheit kann in Form einer elektronischen Schaltung oder eines programmierbaren Computers ausgeführt sein, die geeignet ist die Antwortsignale der Oberflächenwellen-Sensoren auszuwerten, daraus die elektrische Kapazität zu bestimmen und folglich die zumindest eine Eigenschaft des fluiden Mediums in seiner Umgebung zu ermitteln.

Die Elektroden können an der Innenseite des Tanks oder auch an innenliegenden Strukturen des Tanks, wie beispielsweise Schwallblechen zur Vermeidung von Wirbeln innerhalb des Tanks, angebracht werden.

Ein Vorteil der Messvorrichtung besteht darin, dass die Verwendung eines Oberflächenwellen-Sensors zur Messung des Füllstandes in anspruchsvollen Umgebungen, wie tiefen Temperaturen, hohe Beschleunigung, hohe mechanische Belastung und ionisierender Strahlung, möglich ist, sodass diese Messvorrichtung insbesondere zur Messung zumindest einer Eigenschaft oder eines Zustandes eines fluiden Mediums in einer Umgebung einer Trägerrakete, beispielsweise zur Erfassung des Füllstandes von einem Tank einer Trägerrakete, geeignet ist.

Ein weiterer Vorteil der Messvorrichtung besteht darin, dass nur eine einzige Durchgangsöffnung mit der elektrischen Verbindung zwischen der Antenne und dem Interrogator erforderlich ist, da die Antenne im Innenraum des Tanks angeordnet ist und durch das Abfragesignal den mindestens einen Oberflächenwellen-Sensor anregt. Der Oberflächenwellen-Sensor oder eine Mehrzahl dieser Oberflächenwellen-Sensoren werden folglich drahtlos angeregt und benötigen keine eigene elektrische Verbindung zur Außenseite der Tankhülle. Dadurch wird folglich die Dichtigkeit des Tanks verbessert insbesondere bei einem fluiden Medium, wie flüssiger Wasserstoff aufgrund der geringen Molekülgröße.

Ein weiterer Vorteil der Messvorrichtung besteht darin, dass die Position, die Anzahl und die Größe der Oberflächenwellen-Sensoren variabel gewählt werden können, da keine Kabel zur elektrischen Verbindung dieser Oberflächenwellen-Sensoren zu der Außenseite der Tankhülle und folglich weitere Durchgangsöffnungen erforderlich sind. Eine hohe Anzahl von Oberflächenwellen-Sensoren ermöglicht eine entsprechend hohe Messauflösung der elektrischen Kapazitätstomografie innerhalb des Tanks, um beispielsweise den Füllstand in unterschiedlichen Bereichen des Innenvolumens des Tanks oder beispielsweise eine Verteilung des fluiden Mediums in der Umgebung zu bestimmen.

Ein weiterer Vorteil der Messvorrichtung besteht darin, dass die verwendeten passiven Oberflächenwellen-Sensoren bereits bei der Herstellung in die Innenseite der Umgebung beispielsweise durch Functional Printing integriert werden können, sodass dadurch die Produktionsdauer und die Qualität der Funktionsweise der Oberflächenwellen-Sensoren und der elektrischen Verbindungen innerhalb des Tanks verbessert wird.

Vorteilhafterweise können mehrere Oberflächenwellen-Sensoren mit jeweils einem Paar von Elektroden auf der nichtleitenden Trägerschicht an der Innenseite des Tanks angebracht sein, wobei mittels der Antenne jedes der Oberflächenwellen-Sensoren durch das drahtlose Abfragesignal anregbar sind und jedes der Oberflächenwellen-Sensoren ein drahtloses Antwortsignal zurück an die Antenne und weiter an den Interrogator übermittelt, wobei die Antwortsignale der jeweiligen Oberflächenwellen-Sensoren mittels des Interrogators oder einer separaten Auswerteeinheit auswertbar sind, um beispielsweise den Füllstand innerhalb des Tanks zu ermitteln.

Dadurch ist mit jedem der Oberflächenwellen-Sensoren ein Paar von Elektroden an der Innenseite der Umgebung verbunden, sodass die Messung der elektrischen Kapazität in unterschiedlichen Bereichen des Innenvolumens der Umgebung und somit die Messung des Füllstandes zum Beispiel innerhalb der Umgebung in unterschiedlichen Bereichen ermöglicht wird. Insbesondere beim kryogenen fluiden Medium, wie flüssigem Treibstoff LOX oder LH2 für Trägerraketen, die teilweise flüssig und teilweise gasförmig sind, ist die Messung des Füllstandes in mehreren Bereichen des Innenvolumens der Umgebung besonders vorteilhaft. Aus den einzelnen Messungen kann beispielsweise eine Topographie des Füllstandes ermittelt werden, um eine bessere Aussage über den Füllstand der Trägerrakete treffen zu können.

Vorteilhafterweise können die Paare von Elektroden zu jedem der Oberflächenwellen-Sensoren in einer bestimmten festgelegten Füllhöhe des Tanks angeordnet sein, wobei die Antwortsignale der jeweiligen Oberflächenwellen-Sensoren mittels des Interrogators oder der separaten Auswerteeinheit auswertbar sind, um die zumindest eine Eigenschaft wie den Füllstand in der festgelegten Füllhöhe des Tanks zu ermitteln.

Dadurch wird die elektrische Kapazität in mehreren Bereichen des Innenvolumens des Tanks in einer bestimmten festgelegten Höhe gemessen, sodass die Füllhöhe für verschiedene Bereiche in dieser festgelegten Höhe ermittelt werden kann.

Vorteilhafterweise können mindestens zwei Paare von Elektroden zu den Oberflächenwellen-Sensoren in mindestens zwei unterschiedlichen festgelegten Füllhöhen des Tanks angeordnet sein, um den Füllstand in mehreren festgelegten Füllhöhen zu ermitteln.

Dadurch wird die Messung der elektrischen Kapazität in unterschiedlichen Füllhöhen des Tanks ermöglicht, sodass der Füllstand in unterschiedlichen Höhen des Tanks ermittelt werden kann.

Vorteilhafterweise können mehrere Paare von Elektroden zu den jeweiligen Oberflächenwellen-Sensoren in jeder der mindestens zwei unterschiedlichen festgelegten Füllhöhen des Tanks angeordnet sein.

Dadurch wird die Messung der elektrischen Kapazität in unterschiedlichen Bereichen des Innenvolumens des Tanks in unterschiedlichen Füllhöhen des Tanks ermöglicht, sodass eine genauere Ermittlung eine Topographie des Füllstandes im Innenvolumen des Tanks ermöglicht wird.

Ein weiterer Gegenstand der Erfindung ist ein Messverfahren zur Messung zumindest einer Eigenschaft eines fluiden Mediums in einer Umgebung, zum Beispiel den Füllstand in einem Tank, mittels der oben erläuterten Messvorrichtung, wobei das drahtlose Abfragesignal vom Interrogator mittels der Antenne an den Oberflächenwellen-Sensor übermittelt wird. Der Oberflächenwellen-Sensor wird durch das Abfragesignal angeregt, das drahtlose Antwortsignal wird mittels der Antenne empfangen und an den Interrogator übermittelt. Das Antwortsignal wird mittels des Interrogators oder einer separaten Auswerteeinheit ausgewertet, um die Eigenschaft des fluiden Mediums innerhalb der Umgebung zu ermitteln.

Ein Vorteil dieses Messverfahrens besteht darin, dass die Oberflächenwellen-Sensoren drahtlos durch das Abfragesignal des Interrogators angeregt werden und das Antwortsignal drahtlos mittels der Antenne zurück an den Interrogator übermittelt wird, sodass eine beliebige Anzahl von Oberflächenwellen-Sensoren an beliebigen Positionen innerhalb des Tanks angeordnet werden können, um den Füllstand im Innenvolumen des Tanks für verschiedene Bereiche zu ermitteln.

Vorteilhafterweise können mehrere Paare von Elektroden zu jedem der Oberflächenwellen-Sensoren in einer bestimmten festgelegten Füllhöhe des Tanks angeordnet sein, wobei die Antwortsignale der jeweiligen Oberflächenwellen-Sensoren mittels des Interrogators oder eines separaten Auswerteeinheit ausgewertet werden, um den Füllstand in der festgelegten Füllhöhe des Tanks zu ermitteln.

Dadurch kann die elektrische Kapazität und folglich der Füllstand für verschiedene Bereiche des Innenvolumens des Tanks in einer festgelegten Füllhöhe gemessen werden.

Vorteilhafterweise können mindestens zwei Paare von Elektroden zu den Oberflächenwellen-Sensoren in mindestens zwei unterschiedlichen festgelegten Füllhöhen des Tanks angeordnet sein, wobei die Antwortsignale der jeweiligen Oberflächenwellen-Sensoren mittels des Interrogators oder der separaten Auswerteeinheit ausgewertet werden, um den Füllstand in mehreren festgelegten Füllhöhen zu ermitteln.

Dadurch kann die elektrische Kapazität und folglich der Füllstand in mehreren festgelegten Füllhöhen ermittelt werden.

Vorteilhafterweise kann das Antwortsignal durch einen Kapazitätswert zwischen den Elektroden des mindestens einen Oberflächenwellen-Sensors beeinflusst werden, so dass beim Befüllen des Umgebung der Kapazitätswert zwischen den Elektroden durch eine im Vergleich zum in der Umgebung befindlichen Gas abweichende Dielektrizitätskonstante des fluiden Mediums verändert wird und folglich die Veränderung des Antwortsignals mittels des Interrogators oder der separaten Auswerteeinheit ausgewertet wird, um die zumindest eine Eigenschaft wie den Füllstand zu detektieren.

Das Gas in der Umgebung kann Luft, Treibstoff-Gas, wie Wasserstoff, oder auch ein Gasgemisch aus Luft mit dem Treibstoff-Gas sein. Die elektrische Kapazität vom Gas in der Umgebung kann ebenfalls mit der Messvorrichtung gemessen werden. Beim Befüllen des Tanks ändert sich somit die elektrische Kapazität zwischen den jeweiligen Paaren von Elektroden aufgrund der abweichenden Dielektrizitätskonstante des fluiden Mediums, sodass dadurch die beispielhafte Ermittlung des Füllstandes ermöglicht wird.

Ein weiterer Gegenstand dieser Erfindung ist ein Herstellungsverfahren der oben erläuterten Messvorrichtung. Der mindestens eine Oberflächenwellen-Sensor und die mindestens zwei Elektroden werden in Form mindestens eines vorgefertigten integrierten Sensorbandes auf der nicht elektrisch leitenden Trägerschicht, beispielsweise aus Kapton, aufgebracht, beispielsweise durch Auflaminieren.

Ein Vorteil dieses Herstellungsverfahrens ist, dass durch die Verwendung eines vorgefertigten Sensorbandes, umfassend den Oberflächenwellen-Sensor und die beiden Elektroden sowie die elektrischen Verbindungen dazwischen, die Herstellungsdauer verkürzt wird und die Komplexität der Montage innerhalb des Tanks verbessert wird.

Das Aufbringen der nicht elektrisch leitenden Trägerschicht kann beispielsweise ebenfalls durch Auflaminieren einer Folie aus Kapton erfolgen.

Das Auflaminieren bezeichnet einerseits ein stoffschlüssiges, thermisches Fügeverfahren ohne Hilfsmaterialien. Andererseits ist hiermit das Verbinden einer dünnen, oftmals folienartigen Schicht mit einem Trägermaterial mittels eines Klebers gemeint, als auch das Verbinden mindestens zweier Folienschichten einer Thermoplaste durch Erreichen der Glasübergangstemperatur und entsprechenden Drucks.

Vorteilhafterweise können mehrere integrierte Füllstand-Sensorbänder in unterschiedlichen Füllhöhen an der Innenwand bzw. Innenseite des Tanks angebracht werden, um den Füllstand innerhalb des Tanks für verschiedene Füllhöhen zu ermitteln.

Durch das Anbringen der integrierten Füllstand-Sensorbänder in unterschiedlichen Füllhöhen beispielsweise durch Auflaminieren wird die Herstellungsdauer verkürzt und mögliche Montagefehler vermieden.

Vorteilhafterweise kann der mindestens eine Oberflächenwellen-Sensor, die Trägerschicht und die mindestens zwei Elektroden mittels eines Druckverfahrens, wie Functional Printing, automatisch direkt an der Innenwand des Tanks aufgedruckt werden.

Beim Functional Printing (Funktionsintegration durch Drucktechnologie) werden klassische elektrische Komponenten, wie Sensoren, auf eine Oberfläche automatisiert gebracht werden. Dabei wird mit einer digitalen und maskenbasierten Drucktechnologie elektrische leitfähige Paste auf eine Oberfläche gebracht. Durch das Drucken verschiedener geometrische Formen können unterschiedliche Sensoren, im vorliegenden Fall Oberflächenwellen-Sensoren, realisiert werden. Mittels des Functional Printing können nicht nur zweidimensionale Oberflächen bedruckt werden, sondern unter Verwendung von Mehrachsanlagen (z.B. Industrieroboter) kann die Druckpaste auf einer dreidimensional gekrümmten Oberfläche angebracht werden. Durch das Functional Printing werden folglich aus piezoelektrischen Substraten die Piezoelemente und aus einer elektrisch leitenden Paste die elektrisch leitenden Elemente des Oberflächenwellen Sensors sowie die Elektroden aufgedruckt.

Durch die Verwendung des Functional Printing wird folglich die Herstellung der Oberflächenwellen-Sensoren und das Anbringen einer Trägerschicht automatisiert und folglich die Herstellungsdauer verkürzt und die Komplexität vereinfacht, da manuelles Anbringen und damit mögliche Fehler vermieden werden.

Vorteilhafterweise kann die nicht elektrisch leitende Trägerschicht, durch eine Oberflächenbehandlung durch Plasma, durch Auflaminieren einer Folie aus Kapton oder durch Auflaminieren einer Glasfaserschicht, aufgebracht werden.

Durch die Oberflächenbehandlung durch Plasma wird die Oberfläche gründlich gereinigt und die Haftung für das anschließende Auflaminieren verbessert.

Dadurch wird das Herstellen der nicht elektrisch leitenden Trägerschicht automatisiert und folglich die Herstellungsdauer verkürzt.

Vorteilhafterweise kann auf die nicht leitfähige Trägerschicht mittels einer Mehrachsanlage, wie eines Industrieroboters, mittels eines Dispensers eine piezoelektrische Schicht für den Oberflächenwellen-Sensor aufgebracht und polarisiert werden, wobei anschließend durch eine leitfähige Paste ein Interdigital Transducer (IDT) und/ oder Reflektoren des Oberflächenwellen-Sensors sowie die Elektroden auf die Trägerschicht aufgebracht werden.

Ein Industrieroboter mit einen Dispensers bzw. Dosierer ermöglicht das automatisierte und kontrollierte Dosieren von Materialien auf ein Werkstück, wobei sich der Dosierprozess zuverlässig und äußerst wiederholgenau steuern lässt.

Durch die Verwendung eines solchen Industrieroboters wird eine vollautomatische Herstellung und Integration der Oberflächenwellen-Sensoren innerhalb des Tanks ermöglicht.

Denkbar ist weiterhin eine Umgebung, beispielsweise ein Treibstofftank, vorzugsweise für einen Raumflugkörper bzw. eine Trägerrakete, mit dem oben beschriebenen Messvorrichtung und/oder zur Anwendung des oben beschriebenen Messverfahrens und/oder hergestellt nach dem oben beschriebenen Herstellungsverfahren.

Ein Vorteil dieser Umgebung mit der beschriebenen Messvorrichtung, hergestellt nach dem beschriebenen Herstellungsverfahren wäre besonders für eine Trägerrakete geeignet, da die Messung der elektrischen Kapazität innerhalb der Umgebung der Trägerrakete auch bei hohen Temperaturschwankungen, hohen mechanischen Belastungen sowie hohe Beschleunigung gewährleistet wird.

### Kurzbeschreibung der Zeichnungen

Im Folgenden werden bevorzugte Ausführungsbeispiele der Erfindung anhand stark vereinfachter schematischer Zeichnungen erläutert. Es zeigen:
- Fig.1: eine schematische Darstellung der Messvorrichtung mit mehreren Oberflächenwellen-Sensoren;
- Fig.2: eine schematische Darstellung zur Erläuterung der Funktionsweise eines Oberflächenwellen-Sensors mit kapazitiver Kopplung;
- Fig.3: eine schematische Darstellung eines vorintegrierten Sensorbandes;
- Fig.4: eine schematische Darstellung eines Sensorbandes der an der Innenseite einer Umgebung angebracht ist; und
- Fig.5: eine schematische Darstellung zur Erläuterung eines Herstellungsverfahrens mittels eines Industrieroboters.

Die erfindungsgemäße Messvorrichtung wird in den Ausführungsbeispielen als eine Messvorrichtung zur direkten (drahtlosen und autonomen) Messung eines Füllstandes eines fluiden Mediums in einem Tank beschrieben. Es wird ausdrücklich darauf hingewiesen, dass diese erfindungsgemäße Messvorrichtung jedoch nicht auf die Erfassung eines Füllstandes eines fluiden Mediums in einem Tank beschränkt ist. Die Illustration als Füllstand-Messvorrichtung ist rein exemplarisch. Ebenso ist die Illustration des Tanks rein exemplarisch. Mittels der erfindungsgemäßen Messvorrichtung kann allgemein zumindest eine Eigenschaft / zumindest einen Zustand eines fluiden Mediums in einer Umgebung bzw. einem Bilanzraum direkt erfasst werden. Neben der quantitativen Eigenschaft Füllstand (Menge) sowie Verteilung können auch qualitative Eigenschaften des fluiden Mediums in der Umgebung wie zum Beispiel Art des Mediums, Temperatur, Strömungsrichtung und Strömungsgeschwindigkeit erfasst werden. Beispielhafte Umgebungen neben einem Treibstofftank sind Tanks allgemein und Rohrleitungen, beispielsweise eines Fluidverteilungssystems.

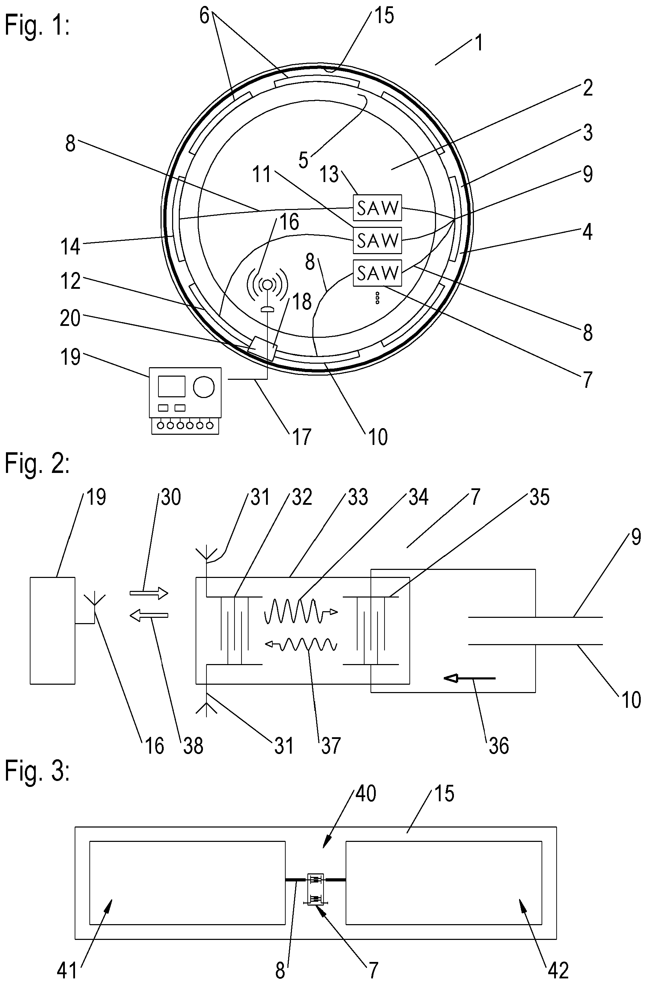

Fig.1 zeigt eine schematische Darstellung der Messvorrichtung 1 für ein fluides Medium 2, wie Treibstoff insbesondere flüssiger Wasserstoff, innerhalb einer Umgebung wie einen Tank 3 einer Trägerrakete. An einer Innenwand bzw. Innenseite 5 der Umgebungshülle, hier Tankhülle 4, sind mehrere voneinander beanstandete Elektroden 6 angebracht, die dazu eingerichtet sind eine elektrische Kapazität im Zwischenraum zwischen den Elektroden 6 im Innenraum des Tanks 3 (innerhalb der Umgebung) zu messen. Die Messvorrichtung weist zusätzlich einen ersten Oberflächenwellen-Sensor 7 auf, der mittels elektrischer Verbindungen 8 mit einer ersten Elektrode 9 und einer zweiten Elektrode 10 verbunden ist, sodass die elektrische Kapazität im Bereich zwischen der ersten Elektrode 9 und der zweiten Elektrode 10 mittels des ersten Oberflächenwellen-Sensors 7 gemessen wird. Ein zweiter Oberflächenwellen-Sensor 11 ist mit der ersten Elektrode 9 und einer dritten Elektrode 12 elektrisch verbunden, sodass die elektrische Kapazität im Bereich zwischen der ersten Elektrode 9 und der dritten Elektrode 12 gemessen wird. Ein dritter Oberflächenwellen-Sensor 13 ist mit der ersten Elektrode 9 und der vierten Elektrode 14 mittels der elektrischen Verbindungen 8 elektrisch verbunden, sodass die elektrische Kapazität im dritten Bereich zwischen der ersten Elektrode 9 und der vierten Elektrode 14 mittels des dritten Oberflächenwellen-Sensors 13 gemessen wird. Auf die gleiche Art und Weise können weitere Oberflächenwellen Sensoren mit den übrigen Elektroden 6 verbunden werden, um weitere Bereiche des Innenvolumens des Tanks 3 abzudecken. Die Elektroden 6, 9, 10, 12 und 14 sind auf einer nichtleitenden Trägerschicht 15 an der Innenwand 5 der Tankhülle 4 angebracht. Eine Antenne 16 ist im Innenraum des Tanks 3 angeordnet und mittels einer elektrischen Verbindung 17 durch eine Durchgangsöffnung 18 durch die Tankhülle 4 des Tanks 3 elektrisch mit einem Interrogator 19 außerhalb des Tanks 3 elektrisch verbunden. Die Durchgangsöffnung 18 ist dabei mit einer Dichtung 20 abgedichtet, sodass das fluide Medium 2 nicht nach außen dringen kann. Ein drahtloses Abfragesignal vom Interrogator 19 wird mittels der Antenne 16 innerhalb des Tanks abgestrahlt und regt die einzelnen über die jeweiligen Elektrodenpaare 6, 9, 10, 12 und 14 die entsprechenden Oberflächenwellen-Sensoren 7, 11, 13 an, wobei diese einen Antwortsignal zurück an die Antenne 16 und weiter an den Interrogator 19 übermitteln, welches ausgewertet wird, um die elektrische Kapazität zwischen den Elektroden zu messen und daraus eine Eigenschaft bzw. einen Zustand des fluiden Mediums wie den Füllstand innerhalb des Tanks 3 zu ermitteln.

Fig.2 zeigt eine schematische Darstellung zur Erläuterung der Funktionsweise der Oberflächenwellen-Sensoren 7, 11, 13 aus Fig.1.der Interrogator 19 sendet mittels der innen liegenden Antenne 16 ein drahtloses Abfragesignal 30, wie durch den Pfeil dargestellt ist, welches von den Antennen 31 an einen interdigitalen Transducer (IDT) 32 weitergeleitet werden, wobei die elektromagnetischen Wellen des Abfragesignals 30 unter Verwendung eines piezoelektrischen Substrats 33 in akustische Oberflächenwellen 34 des Abfragesignal 30 umgewandelt wird. Die akustischen Oberflächenwellen 34 des Abfragesignals 30 werden dann mittels eines Reflektors 35 wiederum in elektromagnetische Wellen umgewandelt und an die jeweils beiden Elektroden 9 und 10 weitergeleitet. In Abhängigkeit von der elektrischen Kapazität zwischen den beiden Elektroden 9 und 10 wird entsprechend ein Antwortsignal 36 erzeugt, wie durch den Pfeil dargestellt ist, welches mittels des Reflektors 35 wiederum in akustische Oberflächenwellen 37 des Antwortsignals 36 unter Verwendung des piezoelektrischen Substrats 33 umgewandelt wird, wobei die akustischen Oberflächenwellen 37 des Antwortsignals 36 mittels des interdigitalen Transducer (IDT) 32 in elektromagnetische Wellen 38 des Antwortsignals 36 umgewandelt werden und mittels der Antennen 31 an die Antenne 16 des Interrogator 19 übermittelt werden. Die elektromagnetischen Wellen 38 des Antwortsignals 36 werden dann mittels des Interrogator 19 ausgewertet, um die elektrische Kapazität zwischen den Elektroden 9 und 10 zu bestimmen und daraus eine Eigenschaft bzw. einen Zustand des fluiden Mediums wie den Füllstand innerhalb des Tanks 3 zu ermitteln. Auf die gleiche Art und Weise werden auch der zweite und der dritte Oberflächenwellen-Sensor 11 und 13 mit dem Abfragesignal 30 angeregt und jeweils ein Antwortsignal ausgelesen.

Fig.3 zeigt eine schematische Darstellung eines vorgefertigten integrierten Sensorbandes 40 umfassend eine erste Elektrode 41, eine zweite Elektrode 42, wobei die Elektroden 41 und 42 mittels elektrischer Leiterbahnen 8 mit dem ersten Oberflächenwellen-Sensor 7 aus Fig.1 und Fig.2 elektrisch verbunden sind, wobei die beiden Elektroden 41, 42 sowie der erste Oberflächenwellen- Sensor 7 und die Leiterbahnen 8 sind auf einer nichtleitenden Trägerschicht 15, beispielsweise aus einer Folie aus Kapton oder einer Glasfaserschicht, angebracht. Das vorgefertigte integrierte Sensorband 40 kann auf einfache Art und Weise an der Innenwand 5 des Tanks 3 aus Fig.1 angebracht werden.

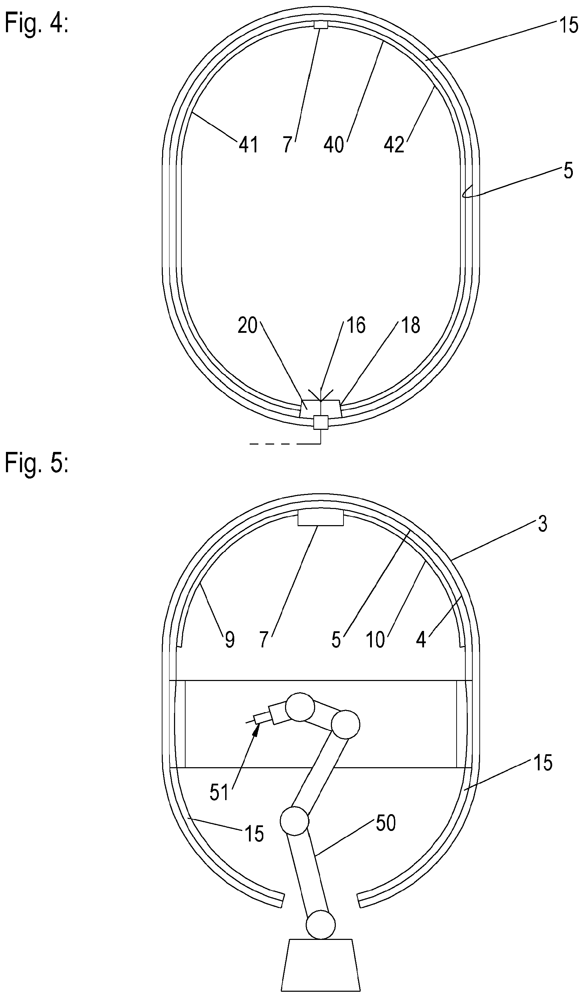

Fig.4 zeigt eine schematische Darstellung eines Sensorbandes 40 aus Fig.3, umfassend den ersten Oberflächenwellen-Sensor 7, eine erste Elektrode 41 und eine zweite Elektrode 42 auf einer nichtleitenden Trägerschicht 15, die an einer Innenwand 5 der Tankhülle 4 angebracht ist. Die innenliegende Antenne 16 ist durch die Durchgangsöffnung 18 der Tankhülle 4 mit einem nicht dargestellten Interrogator verbunden, wobei die Durchgangsöffnung 18 mittels der Dichtung 20 abgedichtet ist.

Fig.5 zeigt eine schematische Darstellung zur Erläuterung eines Herstellungsverfahrens der Messvorrichtung 1 Fig. 1 mittels eines Industrieroboters 50, wobei mittels eines Druckverfahrens (Functional Printing) die Messelektroden 9 und 10 sowie der mindestens eine Oberflächenwellen-Sensor 7 vollautomatisch an der Innenwand 5 der Tankhülle 4 des Tanks 3 aufgebracht werden, wobei zunächst die nichtleitende Trägerschicht 15 unter Verwendung eine Oberflächenbehandlung durch Plasma, Auflaminieren einer Kapton-Folie oder Auflaminieren einer Glasfaserschicht aufgebracht wird, wobei anschließend auf diese nichtleitende Trägerschicht 15 mittels des Dispensers 51 am Industrieroboters 50 eine piezoelektrische Schicht für den Oberflächenwellen-Sensor 7 aus Fig.2 aufgebracht und polarisiert wird, wobei anschließend durch eine leitfähige Paste ein Interdigital Transducer (IDT) 32 und/ oder Reflektor 35 des Oberflächenwellen-Sensors 7 aus Fig.2 sowie die Elektroden 9 und 10 auf die Trägerschicht aufgebracht werden. Folglich ermöglicht dieses Herstellungsverfahren eine vollautomatisierte Integration des drahtlosen Oberflächenwellen-Sensors 7 und der dazugehörigen Elektroden 9 und 10 an der Innenwand 5 der Tankhülle 4.

Die Erfindung betrifft eine Messvorrichtung (1) für ein fluides Medium (2) in einer Umgebung(3) umfassend mindestens zwei in der Umgebung (3) angeordnete und voneinander beabstandete Elektroden (6), die dazu eingerichtet sind, eine elektrische Kapazität im Zwischenraum zwischen ihnen zu messen, dadurch gekennzeichnet, dass die Messvorrichtung (1) zusätzlich mindestens einen Oberflächenwellen-Sensor (7, 11, 13) (engl. Surface Acoustic Wave - SAW), eine nicht elektrisch leitende Trägerschicht (15), mindestens eine Antenne (16) und mindestens einen Interrogator umfasst, wobei die Elektroden (6) auf der nichtleitenden Trägerschicht (15) angebracht sind, wobei die beiden Elektroden (6) mit dem Oberflächenwellen-Sensor (7, 11, 13) elektrisch verbunden sind, wobei die Antenne (16) innerhalb der Umgebung (3) angeordnet ist und mittels einer elektrischen Verbindung (17) durch eine Durchgangsöffnung (18) durch eine Umgebungshülle (4) elektrisch mit dem Interrogator (19) außerhalb der Umgebung (3) verbunden ist, wobei ein drahtloses Abfragesignal (30) vom Interrogator (19) mittels der Antenne (16) an den Oberflächenwellen-Sensor (7, 11, 13) übermittelbar ist, wobei der Oberflächenwellen-Sensor (7, 11, 13) durch das Abfragesignal (30) anregbar ist und ein drahtloses Antwortsignal (38) mittels der Antenne (16) empfangbar ist und an den Interrogator (19) übermittelbar ist, wobei das Antwortsignal (38) mittels des Interrogators (19) oder einer separaten Auswerteeinheit auswertbar ist, um die elektrische Kapazität zwischen den Elektroden (6) zu messen und daraus zumindest eine Eigenschaft des fluiden Mediums innerhalb der Umgebung (3) zu ermitteln.

### Bezugszeichenliste

- 1: Messvorrichtung
- 2: fluides Medium
- 3: Umgebung / Bilanzraum / zum Beispiel Tank
- 4: Tankhülle
- 5: Innenwand / Innenseite
- 6: Elektroden
- 7: erster Oberflächenwellen-Sensor
- 8: elektrischer Verbindungen
- 9: erste Elektrode
- 10: zweite Elektrode
- 11: zweiter Oberflächenwellen-Sensor
- 12: dritte Elektrode
- 13: dritter Oberflächenwellen-Sensor
- 14: vierte Elektrode
- 15: nichtleitenden Trägerschicht
- 16: Antenne
- 17: elektrischen Verbindung
- 18: Durchgangsöffnung
- 19: Interrogator
- 20: Dichtung
- 30: drahtloses Abfragesignal
- 31: Antenne
- 32: interdigitaler Transducer (IDT)
- 33: piezoelektrisches Substrat
- 34: akustische Oberflächenwellen
- 35: Reflektor
- 36: Antwortsignal
- 37: akustische Oberflächenwellen
- 38: elektromagnetischen Wellen
- 40: Sensorband
- 41: erste Elektrode
- 42: zweite Elektrode
- 50: Industrieroboter
- 51: Dispenser

## Patentansprüche

1. Messvorrichtung (1) zur Erfassung zumindest einer Eigenschaft eines fluiden Mediums (2) in einer Umgebung (3), umfassend mindestens zwei in der Umgebung(3) angeordnete und voneinander beabstandete Elektroden (6), die dazu eingerichtet sind, eine elektrische Kapazität im Zwischenraum zwischen ihnen zu messen, wobei die Messvorrichtung (1) zusätzlich mindestens einen Oberflächenwellen-Sensor (7, 11, 13) (engl. Surface Acoustic Wave - SAW), eine nicht elektrisch leitende Trägerschicht (15), mindestens eine Antenne (16) und mindestens einen Interrogator umfasst, wobei die Elektroden (6) auf der nichtleitenden Trägerschicht (15) angebracht sind, wobei die beiden Elektroden (6) mit dem Oberflächenwellen-Sensor (7, 11, 13) elektrisch verbunden sind, wobei die Antenne (16) innerhalb der Umgebung(3) angeordnet ist und mittels einer elektrischen Verbindung (17) durch eine Durchgangsöffnung (18) durch eine Umgebungshülle (4) elektrisch mit dem Interrogator (19) außerhalb der Umgebung (3) verbunden ist, wobei ein drahtloses Abfragesignal (30) vom Interrogator (19) mittels der Antenne (16) an den Oberflächenwellen-Sensor (7, 11, 13) übermittelbar ist, wobei der Oberflächenwellen-Sensor (7, 11, 13) durch das Abfragesignal (30) anregbar ist und ein drahtloses Antwortsignal (38) mittels der Antenne (16) empfangbar ist und an den Interrogator (19) übermittelbar ist, wobei das Antwortsignal (38) mittels des Interrogators (19) oder einer separaten Auswerteeinheit auswertbar ist, um die elektrische Kapazität zwischen den Elektroden (6) zu messen und daraus zumindest eine Eigenschaft des Mediums in der Umgebung (3) zu ermitteln.

2. Messvorrichtung (1) nach Anspruch 1, wobei mehrere Oberflächenwellen-Sensoren (7, 11, 13) mit jeweils einem Paar von Elektroden (6) auf der nichtleitenden Trägerschicht (15) an der Innenseite der Umgebungshülle angebracht sind, wobei mittels der Antenne (16) jedes der Oberflächenwellen-Sensoren (7, 11, 13) durch das drahtlose Abfragesignal (30) anregbar sind und jedes der Oberflächenwellen-Sensoren (7, 11, 13) ein drahtloses Antwortsignal (38) zurück an die Antenne (16) und weiter an den Interrogator (19) übermittelt, wobei die Antwortsignale (38) der jeweiligen Oberflächenwellen-Sensoren (7, 11, 13) mittels des Interrogators (19) auswertbar sind, um die Eigenschaften des Mediums in der Umgebung (3) zu ermitteln.

3. Messvorrichtung (1) nach Anspruch 2, wobei die Paare von Elektroden (6) zu jedem der Oberflächenwellen-Sensoren (7, 11, 13) in einer bestimmten festgelegten Füllhöhe der Umgebung (3) angeordnet sind, wobei die Antwortsignale (38) der jeweiligen Oberflächenwellen-Sensoren (7, 11, 13) mittels des Interrogators (19) oder der separaten Auswerteeinheit auswertbar sind, um einen Füllstand in der festgelegten Füllhöhe der Umgebung (3) zu ermitteln.

4. Messvorrichtung (1) nach Anspruch 2, wobei mindestens zwei Paare von Elektroden (6) zu den Oberflächenwellen-Sensoren (7, 11, 13) in mindestens zwei unterschiedlichen festgelegten Füllhöhen der Umgebung (3) angeordnet sind, um einen Füllstand in mehreren festgelegten Füllhöhen zu ermitteln.

5. Messvorrichtung (1) nach Anspruch 4, wobei mehrere Paare von Elektroden (6) zu den jeweiligen Oberflächenwellen-Sensoren (7, 11, 13) in jeder der mindestens zwei unterschiedlichen festgelegten Füllhöhen der Umgebung (3) angeordnet sind.

6. Messverfahren zur Messung zumindest einer Eigenschaft eines fluiden Mediums in einer Umgebung (3) mittels der Messvorrichtung (1) nach einem der Ansprüche 1-5, wobei das drahtlose Abfragesignal (30) vom Interrogator (19) mittels der Antenne (16) an den Oberflächenwellen-Sensor (7, 11, 13) übermittelt wird, wobei der Oberflächenwellen-Sensor (7, 11, 13) durch das Abfragesignal (30) angeregt wird und das drahtlose Antwortsignal (38) mittels der Antenne (16) empfangen wird und an den Interrogator (19) übermittelt wird, wobei das Antwortsignal (38) mittels des Interrogator (19) oder der separaten Auswerteeinheit ausgewertet wird, um zumindest eine Eigenschaften des Mediums in der Umgebung (3) zu ermitteln.

7. Messverfahren nach Anspruch 6, wobei mehrere Paare von Elektroden (6) zu jedem der Oberflächenwellen-Sensoren (7, 11, 13) in einer bestimmten festgelegten Füllhöhe der Umgebung (3) angeordnet sind, wobei die Antwortsignale (38) der jeweiligen Oberflächenwellen-Sensoren (7, 11, 13) mittels des Interrogator (19) oder der separaten Auswerteeinheit ausgewertet werden, um einen Füllstand in der festgelegten Füllhöhe der Umgebung (3) zu ermitteln.

8. Messverfahren nach Anspruch 6, wobei mindestens zwei Paare von Elektroden (6) zu den Oberflächenwellen-Sensoren (7, 11, 13) in mindestens zwei unterschiedlichen festgelegten Füllhöhen der Umgebung (3) angeordnet sind, wobei die Antwortsignale (38) der jeweiligen Oberflächenwellen-Sensoren (7, 11, 13) mittels des Interrogators (19) oder der separaten Auswerteeinheit ausgewertet werden, um einen Füllstand in mehreren festgelegten Füllhöhen zu ermitteln.

9. Messverfahren nach einem der Ansprüche 6-8, wobei das Antwortsignal (38) durch einen Kapazitätswert zwischen den Elektroden (6) des mindestens einen Oberflächenwellen-Sensors beeinflusst wird, so dass beim Befüllen der Umgebung (3) der Kapazitätswert zwischen den Elektroden (6) durch eine im Vergleich zum in der Umgebung (3) befindlichen Gas abweichende Dielektrizitätskonstante des fluiden Mediums (2) verändert wird und folglich die Veränderung des Antwortsignals (38) mittels des Interrogators (19) oder der separaten Auswerteeinheit ausgewertet wird, um den Füllstand zu detektieren.

10. Herstellungsverfahren der Messvorrichtung (1) nach einem der Ansprüche 1-5, wobei der mindestens eine Oberflächenwellen-Sensor (7) und die mindestens zwei Elektroden (41, 42) in Form mindestens eines vorgefertigten integrierten Sensorbandes (40) auf der nicht elektrisch leitenden Trägerschicht (15), beispielsweise aus Kapton, aufgebracht wird, beispielsweise durch Auflaminieren.

11. Herstellungsverfahren nach Anspruch 10, wobei mehrere integrierte Füllstand-Sensorbänder (40) in unterschiedlichen Füllhöhen an der Innenseite der Umgebungshülle angebracht werden, um einen Füllstand in der Umgebung (3) für verschiedene Füllhöhen zu ermitteln.

12. Herstellungsverfahren nach einem der Ansprüche 1-5, wobei der mindestens eine Oberflächenwellen-Sensor (7), die Trägerschicht (15) und die mindestens zwei Elektroden (9, 10) mittels eines Druckverfahrens, wie Functional Printing, automatisch direkt an der Innenseite der Umgebungshülle aufgedruckt werden.

13. Herstellungsverfahren nach Anspruch 12, wobei die nicht elektrisch leitende Trägerschicht (15), durch eine Oberflächenbehandlung durch Plasma, durch Auflaminieren einer Folie aus Kapton oder durch Auflaminieren einer Glasfaserschicht, aufgebracht wird.

14. Herstellungsverfahren nach Anspruch 12 oder 13, wobei auf die nicht leitfähige Trägerschicht (15) mittels einer Mehrachsanlage, wie eines Industrieroboters (50), mittels eines Dispensers (51) eine piezoelektrische Schicht (33) für den Oberflächenwellen-Sensor (7) aufgebracht und polarisiert wird, wobei anschließend durch eine leitfähige Paste ein Interdigital Transducer (IDT) (32) und/ oder Reflektor (35) des Oberflächenwellen-Sensors (7) sowie die Elektroden (9, 10) auf die Trägerschicht (15) aufgebracht werden.

## Claims

1. A measuring device (1) for detecting at least one property of a fluid medium (2) in an environment (3), comprising at least two spaced-apart electrodes (6) that are arranged in the environment (3) and are configured to measure an electrical capacitance in the space between them, wherein the measuring device (1) additionally comprises at least one surface acoustic wave (SAW) sensor (7, 11, 13), a non-electrically-conductive carrier layer (15), at least one antenna (16) and at least one interrogator, wherein the electrodes (6) are attached to the non-conductive carrier layer (15), wherein the two electrodes (6) are electrically connected to the surface acoustic wave sensor (7, 11, 13), wherein the antenna (16) is arranged within the environment (3) and is electrically connected to the interrogator (19) outside the environment (3) by means of an electrical connection (17) through a through-opening (18) through a surrounding shell (4), wherein a wireless interrogating signal (30) can transferred from the interrogator (19) to the surface acoustic wave sensor (7, 11, 13) by means of the antenna (16), wherein the surface acoustic wave sensor (7, 11, 13) can be excited by the interrogating signal (30) and a wireless response signal (38) can be received by means of the antenna (16) and can be transferred to the interrogator (19), wherein the response signal (38) can be evaluated by means of the interrogator (19) or a separate evaluation unit in order to measure the electrical capacitance between the electrodes (6) and to determine therefrom at least one property of the medium within the environment (3).

2. The measuring device (1) according to claim 1, wherein multiple surface acoustic wave sensors (7, 11, 13) are each attached with a pair of electrodes (6) to the non-conductive carrier layer (15) on the inner side of the surrounding shell, wherein, by means of the antenna (16), each of the surface acoustic wave sensors (7, 11, 13) can be excited by the wireless interrogating signal (30), and each of the surface acoustic wave sensors (7, 11, 13) transfers a wireless response signal (38) back to the antenna (16) and further to the interrogator (19), wherein the response signals (38) of the respective surface acoustic wave sensors (7, 11, 13) can be evaluated by the interrogator (19) to determine the properties of the medium in the environment (3).

3. The measuring device (1) according to claim 2, wherein the pairs of electrodes (6) to each of the surface acoustic wave sensors (7, 11, 13) are arranged at a certain specified filling height of the environment (3), wherein the response signals (38) of the respective surface acoustic wave sensors (7, 11, 13) can be evaluated by means of the interrogator (19) or the separate evaluation unit in order to determine a fill level at the specified filling height of the environment (3).

4. The measuring device (1) according to claim 2, wherein at least two pairs of electrodes (6) to the surface acoustic wave sensors (7, 11, 13) are arranged at at least two different specified filling heights of the environment (3) in order to determine a fill level at multiple specified filling heights.

5. The measuring device (1) according to claim 4, wherein multiple pairs of electrodes (6) to the respective surface wave sensors (7, 11, 13) are arranged at each of the at least two different specified filling heights of the environment (3).

6. A measuring method for measuring at least one property of a fluid medium in an environment (3) by means of the measuring device (1) according to any one of claims 1 to 5, wherein the wireless interrogating signal (30) is transferred by means of the antenna (16) from the interrogator (19) to the surface acoustic wave sensor (7, 11, 13), wherein the surface acoustic wave sensor (7, 11, 13) is excited by the interrogating signal (30), and the wireless response signal (38) is received by means of the antenna (16) and transferred to the interrogator (19), wherein the response signal (38) is evaluated by means of the interrogator (19) or the separate evaluation unit in order to determine at least one property of the medium in the environment (3).

7. The measuring method according to claim 6, wherein multiple pairs of electrodes (6) to each of the surface acoustic wave sensors (7, 11, 13) are arranged at a certain specified filling height of the environment (3), wherein the response signals (38) of the respective surface acoustic wave sensors (7, 11, 13) are evaluated by means of the interrogator (19) or the separate evaluation unit in order to determine a fill level at the specified filling height in the environment (3).

8. The measuring method according to claim 6, wherein at least two pairs of electrodes (6) to the surface acoustic wave sensors (7, 11, 13) are arranged at at least two different specified filling heights of the environment (3), wherein the response signals (38) of the respective surface acoustic wave sensors (7, 11, 13) are evaluated by means of the interrogator (19) or the separate evaluation unit in order to determine a fill level at multiple specified filling heights.

9. The measuring method according to any one of claims 6 to 8, wherein the response signal (38) is influenced by a capacitance value between the electrodes (6) of the at least one surface acoustic wave sensor, so that upon filling the environment (3), the capacitance value between the electrodes (6) is altered by a dielectric constant of the fluid medium (2) that differs compared to that of the gas present in the environment (3), and consequently, the change in the response signal (38) is evaluated by means of the interrogator (19) or the separate evaluation unit in order to detect the fill level.

10. A production method for the measuring device (1) according to any one of claims 1 to 5, wherein the at least one surface acoustic wave sensor (7) and the at least two electrodes (41, 42) are applied in the form of at least one prefabricated integrated sensor strip (40) onto the non-electrically-conductive carrier layer (15), for example made of Kapton, for example by lamination.

11. The production method according to claim 10, wherein multiple integrated level sensor strips (40) are attached to the inner side of the surrounding shell at different filling heights in order to determine a fill level in the environment (3) for different filling heights.

12. The production method according to any one of claims 1 to 5, wherein the at least one surface acoustic wave sensor (7), the carrier layer (15), and the at least two electrodes (9, 10) are automatically printed directly onto the inner side of the surrounding shell by means of a printing process, such as functional printing.

13. The production method according to claim 12, wherein the non-electrically-conductive carrier layer (15) is applied by means of a surface treatment by plasma, by laminating a film made of Kapton, or by laminating a glass fiber layer.

14. The production method according to claim 12 or 13, wherein a piezoelectric carrier layer (33) for the surface acoustic wave sensor (7) is applied onto the non-conductive carrier layer (15) and polarized by means of a multi-axis system, such as an industrial robot (50), by means of a dispenser (51), wherein an interdigital transducer (IDT) (32) and/or reflector (35) of the surface acoustic wave sensor (7), as well as the electrodes (9, 10), are subsequently applied onto the carrier layer (15) by a conductive paste.

## Revendications

1. Dispositif de mesure (1), destiné à détecter au moins une propriété d'un agent (2) fluide dans un environnement (3), comprenant au moins deux électrodes (6), placées dans l'environnement (3) et écartées l'une de l'autre, qui sont configurées pour mesurer une capacité électrique dans l'espace intermédiaire entre elles, le dispositif de mesure (1) comprenant additionnellement au moins un capteur à ondes acoustiques de surface (7, 11, 13) (en Anglais Surface Acoustic Wave - SAW), une couche porteuse (15) non conductrice d'électricité, au moins une antenne (16) et au moins une unité d'interrogation, les électrodes (6) étant montées sur la couche porteuse (15) non conductrice d'électricité, les deux électrodes (6) étant électriquement connectées avec le capteur à ondes acoustiques de surface (7, 11, 13), l'antenne (16) étant placée à l'intérieur de l'environnement (3) et étant connectée électriquement, au moyen d'une connexion (17) électrique, à travers un orifice de passage (18) à travers une enveloppe de l'environnement (4) avec l'unité d'interrogation (19) à l'extérieur de l'environnement (3), un signal d'interrogation (30) sans fil étant susceptible d'être transmis par l'unité d'interrogation (19) au moyen de l'antenne (16) au capteur à ondes acoustiques de surface (7, 11, 13), le capteur à ondes acoustiques de surface (7, 11, 13) étant susceptible d'être excité par le signal d'interrogation (30) et un signal de réponse (38) sans fil étant susceptible d'être réceptionné au moyen de l'antenne (16) et d'être transmis à l'unité d'interrogation (19), le signal de réponse (38) étant susceptible d'être évalué au moyen de l'unité d'interrogation (19) ou d'une unité d'évaluation séparée, pour mesurer la capacité électrique entre les électrodes (6) et pour déterminer à partir de celle-ci au moins une propriété de l'agent dans l'environnement (3).

2. Dispositif de mesure (1) selon la revendication 1, plusieurs capteurs à ondes acoustiques de surface (7, 11, 13) dotés chacun d'une paire d'électrodes (6) étant montés sur la couche porteuse (15) non conductrice, sur la face interne de l'enveloppe de l'environnement, au moyen de l'antenne (16), chacun des capteurs à ondes acoustiques de surface (7, 11, 13) étant susceptible d'être excité par le signal d'interrogation (30) sans fil et chacun des capteurs à ondes acoustiques de surface (7, 11, 13) transmettant en retour à l'antenne (16) et ensuite à l'unité d'interrogation (19) un signal de réponse (38) sans fil, les signaux de réponse (38) des capteurs à ondes acoustiques de surface (7, 11, 13) respectifs étant susceptibles d'être évalués au moyen de l'unité d'interrogation (19), pour déterminer les propriétés de l'agent dans l'environnement (3).

3. Dispositif de mesure (1) selon la revendication 2, les paires d'électrodes (6) de chacun des capteurs à ondes acoustiques de surface (7, 11, 13) étant placés à une hauteur de remplissage déterminée de l'environnement (3), les signaux de réponse (38) des capteurs à ondes acoustiques de surface (7, 11, 13) respectifs étant susceptibles d'être évalués au moyen de l'unité d'interrogation (19) ou de l'unité d'évaluation séparée, pour déterminer un niveau de remplissage dans la hauteur de remplissage établie dans l'environnement (3).

4. Dispositif de mesure (1) selon la revendication 2, au moins deux paires d'électrodes (6) des capteurs à ondes acoustiques de surface (7, 11, 13) étant placées à au moins deux différentes hauteurs de remplissage établies dans l'environnement (3), pour déterminer un niveau de remplissage à plusieurs hauteurs de remplissage établies.

5. Dispositif de mesure (1) selon la revendication 4, plusieurs paires d'électrodes (6) des capteurs à ondes acoustiques de surface (7, 11, 13) étant placées à chacune des au moins deux différentes hauteurs de remplissage établies dans l'environnement (3).

6. Procédé de mesure, destiné à mesurer au moins une propriété d'un agent fluide dans un environnement (3) au moyen du dispositif de mesure (1) selon l'une quelconque des revendications 1 à 5, le signal d'interrogation (30) sans fil étant transmis par l'unité d'interrogation (19) au moyen de l'antenne (16) au capteur à ondes acoustiques de surface (7, 11, 13), le capteur à ondes acoustiques de surface (7, 11, 13) étant excité par le signal d'interrogation (30) et le signal de réponse (38) sans fil étant réceptionné au moyen de l'antenne (16) et transmis à l'unité d'interrogation (19), le signal de réponse (38) étant évalué au moyen de l'unité d'interrogation (19) ou de l'unité d'évaluation séparé, pour déterminer au moins une propriété de l'agent dans l'environnement (3).

7. Procédé de mesure selon la revendication 6, plusieurs paires d'électrodes (6) de chacun des capteurs à ondes acoustiques de surface (7, 11, 13) étant placées à une certaine hauteur de remplissage établie de l'environnement (3), les signaux de réponse (38) des capteurs à ondes acoustiques de surface (7, 11, 13) respectifs étant évalués au moyen de l'unité d'interrogation (19) ou de l'unité d'évaluation séparée, pour déterminer un niveau de remplissage dans la hauteur de remplissage établie de l'environnement (3).

8. Procédé de mesure selon la revendication 6, au moins deux paires d'électrodes (6) des capteurs à ondes acoustiques de surface (7, 11, 13) étant placées à au moins deux différentes hauteurs de remplissage établies dans l'environnement (3), les signaux de réponse (38) des capteurs à ondes acoustiques de surface (7, 11, 13) respectifs étant évalués au moyen de l'unité d'interrogation (19) ou de l'unité d'évaluation séparée, pour déterminer un niveau de remplissage à plusieurs hauteurs de remplissage établies.

9. Procédé de mesure selon l'une quelconque des revendications 6 à 8, le signal de réponse (38) étant influencé par une valeur capacitive entre les électrodes (6) de l'au moins un capteur à ondes acoustiques de surface, de sorte que lors du remplissage de l'environnement (3), la valeur capacitive entre les électrodes (6) soit modifiée par une constante diélectrique de l'agent (2) fluide, divergente comparée au gaz présent dans l'environnement (3) et suite à quoi, la modification du signal de réponse (38) étant évaluée au moyen de l'unité d'interrogation (19) ou de l'unité d'évaluation séparée, pour détecter le niveau de remplissage.

10. Procédé de fabrication du dispositif de mesure (1) selon l'une quelconque des revendications 1 à 5, l'au moins un capteur à ondes acoustiques de surface (7) et les au moins deux électrodes (41, 42) étant appliqués par exemple en Kapton, par exemple par laminage sous la forme d'au moins une bande de capteurs (40) préfabriquée sur la couche porteuse (15) non conductrice d'électricité.

11. Procédé de fabrication selon la revendication 10, plusieurs bandes de capteurs (40) de niveau de remplissage intégrées étant montées à différentes hauteurs de remplissage sur la face interne de l'enveloppe de l'environnement, pour déterminer un niveau de remplissage dans l'environnement (3) pour différentes hauteurs de remplissage.

12. Procédé de fabrication selon l'une quelconque des revendications 1 à 5, l'au moins un capteur à ondes acoustiques de surface (7), la couche porteuse (15) et les au moins deux électrodes (9, 10) étant imprimés automatiquement au moyen d'un procédé d'impression, comme le Functional Printing, directement sur la face interne de l'enveloppe de l'environnement.

13. Procédé de fabrication selon la revendication 12, la couche porteuse (15) non conductrice d'électricité étant appliquée par un traitement de surface au plasma, par laminage d'un film en Kapton ou par laminage d'une couche de fibre de verre.

14. Procédé de fabrication selon la revendication 12 ou 13, sur la couche porteuse (15) non conductrice, une couche piézoélectrique (33) destinée au capteur à ondes acoustiques de surface (7) étant appliquée, au moyen d'un distributeur (51), par une installation multiaxes, telle qu'un robot industriel (50), puis polarisée, par la suite, un transducteur interdigité (IDT) (32) et / ou un réflecteur (35) du capteur à ondes acoustiques de surface (7), ainsi que les électrodes (9, 10) étant appliqués sur la couche porteuse (15) au moyen d'une pâte conductrice.
